# EUROPEAN PATENT SPECIFICATION

(11) **EP 1 569 874 B1**
(45) Date of publication and mention of the grant of the patent: **20.08.2008**
(21) Application number: 03780647.8
(22) Date of filing: 24.11.2003
(51) Int. Cl.: C03B 23/035, C03B 23/025, C03B 23/023

(54) **MACHINE AND PROCESS FOR SHAPING, ANNEALING AND QUENCHING GLASS SHEETS, OR SIMILAR MATERIALS**
VORRICHTUNG UND VERFAHREN ZUM FORMEN, KÜHLEN UND ABSCHRECKEN DER GLASSCHEIBEN ODER DER IDENTISCHEN MATERIALIEN
MACHINE ET PROCEDE DE FACONNAGE, DE RECUISSON ET DE REFROIDISSEMENT DE FEUILLES DE VERRE OU DE MATERIAUX SIMILAIRES

(30) Priority: 11.12.2002 IT MO20020353
(43) Date of publication of application: 07.09.2005
(73) Proprietor: Keraglass Engineering S.R.L., 42031 Baiso (Reggio Emilia) (IT)
(72) Inventor: SPEZZANI, Stefano, I-42031 Baiso (Reggio Emilia) (IT)
(74) Representative: Gotra, Stefano
(86) International application number: PCT/IT2003/000768
(87) International publication number: WO 2004/052798

(56) References cited:
- EP-A- 0 261 612
- EP-A- 1 236 692
- US-A- 3 809 544
- US-A- 3 928 013
- US-A- 4 240 816
- US-A- 5 004 491
- US-A- 5 669 951

## Description

### Technical Field

The invention relates to a machine for forming glass sheets, or similar materials.

### Background Art

Specifically, though not exclusively, the invention is usefully applied in the manufacture of wash basins or tables with incorporated food compartments.

At present, as is well known, the production of wash basins or tables with incorporated food compartments, or the like, includes distinct and different work stages, followed by a detensioning stage which is necessary for performing further mechanical work operations and, finally, a hardening stage.

Each of the above-mentioned stages of the forming process is done using suitable machinery and apparatus.

In particular, forming is done using a machine comprising a closed chamber in which a heating element is located as well as the forming die. Once the sheets to be formed are positioned in the machine, and the number of sheets cannot exceed a few units, the forming cycle comprises a heating stage, which lasts about four hours, reaching differentiated temperatures of between 600°C and 800°C, and a subsequent cooling stage also lasting about four hours (preferably longer). During the above cycle the machine operates in a step system. The products obtained cannot however be sent on to subsequent work operations, for example, boring of holes for taps or pipes, as there are internal tensions in the materials which would lead to breakage of the piece.

The detensioning, or stabilisation stage, which is necessary to obviate the risk of breakage, is performed in a special machine, which comprises a plant able to reduce the temperature of the pieces produced during the forming stage down to 20°C in controlled stages. In this case too the machine operates in steps, regulating the cooling process for an overall cooling cycle lasting around twenty hours.

US 5 004 491 discloses a process for forming (press bending) glass sheets which, comprises the following stages: - heating a glass sheet; forming the glass sheet in a specifics forming dies; -detensioning the product obtained from the forming stage or-hardening it(by using as heating means the means for heating using during the forming stage)

The hardening operation is performed using a further machine, which includes a heating plant with a rapid-cooling section.

The machines for forming the glass sheets, or similar material, as they exist at present, are therefore rather complex and expensive, both regarding the machines and equipment necessary, and regarding the personnel required for carrying out the various stages of the process.

The main aim of the present invention is to provide a single machine with which the process of forming glass sheets, or like materials, can be rationally and efficiently performed.

A further aim of the invention is to provide an innovative process for forming glass sheets or the like, which is simplified and optimized with respect to the prior art.

The above-mentioned aims and other besides are all attained with a machine for glass sheet forming, or like materials, which comprises various sections, interconnected by means of conveyors, which are dedicated to the process of forming the piece, the detensioning stage and the hardening stage, the forming section being located in an intermediate section between the other two sections, and being provided with means for heating necessary for carrying out the three above-cited operations.

The forming section comprises means for conveying, namely roller conveyors, arranged on two sides which are parallel to the advancement direction of the work pieces and means for die-forming associated to means for creating a depression, to means for heating and to means for localized cooling of the work-pieces.

The detensioning section is composed of an insulated chamber in which the pieces arrive on exiting from the forming section. The detensioning section comprises a station for removing the pieces from the roller conveyor and a continuous-action rack which can bear, in contiguous vertical planes, a considerable number of the pieces during a controlled cooling stage.

The hardening section uses the means for heating comprised in the forming section and specifically comprises means for forced-air cooling arranged above and below the conveyor plane of the pieces subjected to the hardening process. A forming process for forming glass sheets or the like, according to the invention, comprises, in order, the following stages:
heating the glass (or like material) sheets;
forming the sheets in specific dies;
detensioning the products obtained from the forming stage.

A hardening stage is separately performed, using means and equipment which are shared with the heating and forming stages.

The above brief description clearly sets out the advantages of the machine and forming process of the invention, both in relation to the overall reduction of energy consumption and regarding the reduction in manpower needed to carry out the process, and, finally, in relation to the working times of the process of the invention.

### Disclosure of Invention

Further characteristics and advantages of the present invention will better emerge from the detailed description that follows of a preferred but non-exclusive embodiment of the invention, illustrated purely by way of a non-limiting example in the accompanying figures of the drawings, in which:
figure 1 is a view of a longitudinal section of a forming machine according to the invention;
figure 2 is a plan view, according to an intermediate section, of the machine of figure 1;
figures 3, 4 and 5 are views relating to special operative configurations of parts of the machine of the invention;
figure 6 is a view of a detail of the machine;
figure 7 is a detailed view of a sheet of glass and a support plate used during the forming process.

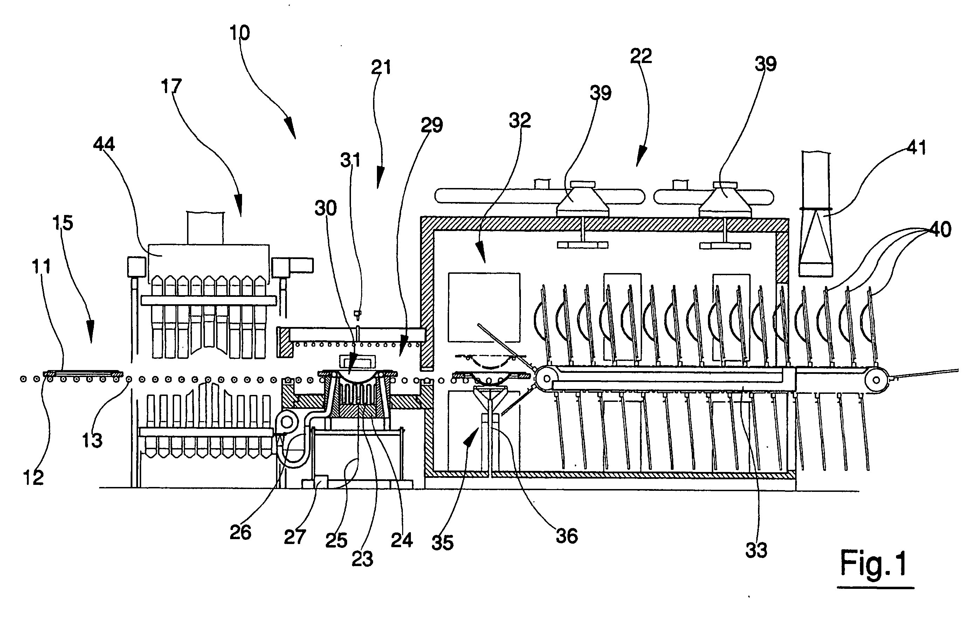

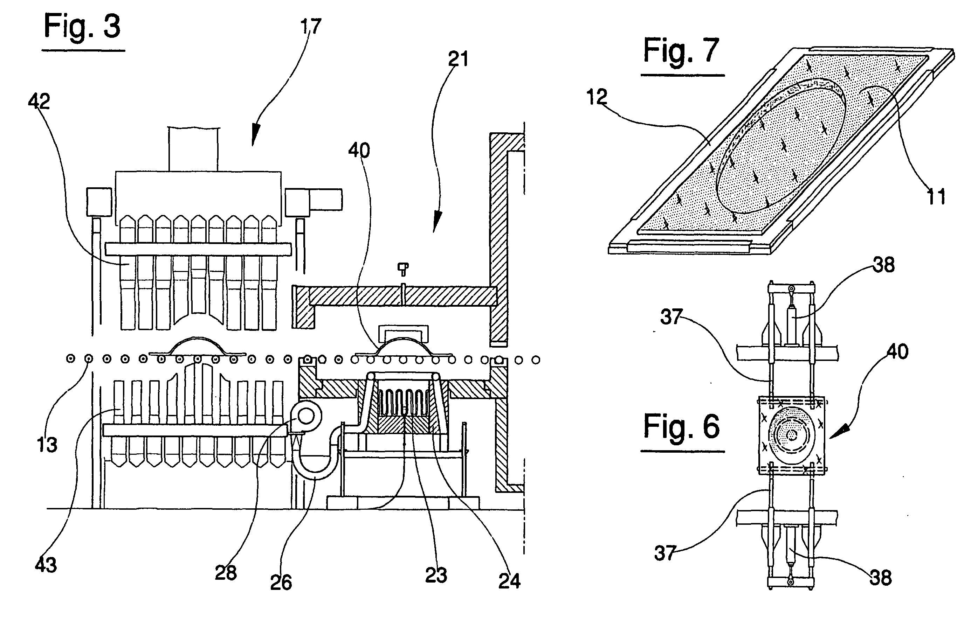

With reference to figure 1, 10 denotes a machine for forming glass sheets 11, in the embodiment an elliptical wash-basin, illustrated more clearly in figure 7, where a plate 12 is shown in detail, which plane supports the sheet 11 during the various stages of the forming process through the machine 10.

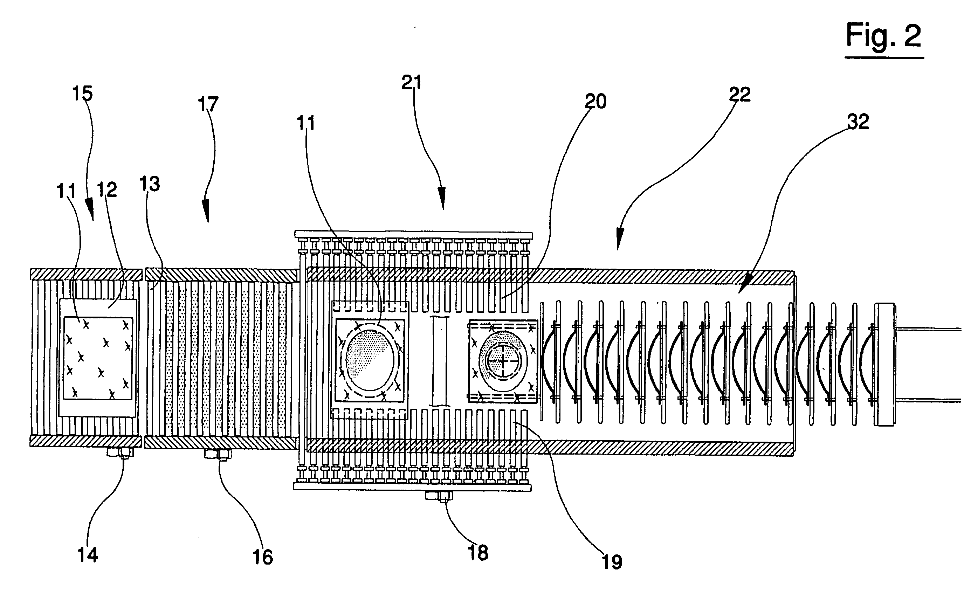

The glass sheet is translated through the various sections of the machine using roller conveyors 13, powered by separate actuators dedicated to the sections of the machine. In particular, as can be seen in figure 2, an actuator 14 is dedicated to the rotation of the rollers situated at an inlet 15 position, of the support plates 12. A second actuator 16 is dedicated to rotating the rollers present in a rapid cooling section 17, used, as we shall see, during the hardening operation. A third actuator 18 is dedicated to the rotation of the rollers arranged on two separate lines 19, 20, at the forming section 21 and at the start of the detensioning section 22.

The forming section 21 is located in a central position of the machine 10 as it is used in each of the operations of the forming process. The forming section 21 comprises the heating elements 23, which heating elements 23 are used in each of the operations. The heating elements 23 are arranged internally of the forming die 24, which is also provided with means 25 for creating a depression in the die, and which is also provided with means for cooling 26 the perimeter of the concavity 30 made in the glass sheet 11.

The means for creating a depression 25 are connected to a suction pump 27, while the means for cooling 26, which operate a localized cooling action on the sheet 11, are connected to a ventilator 28.

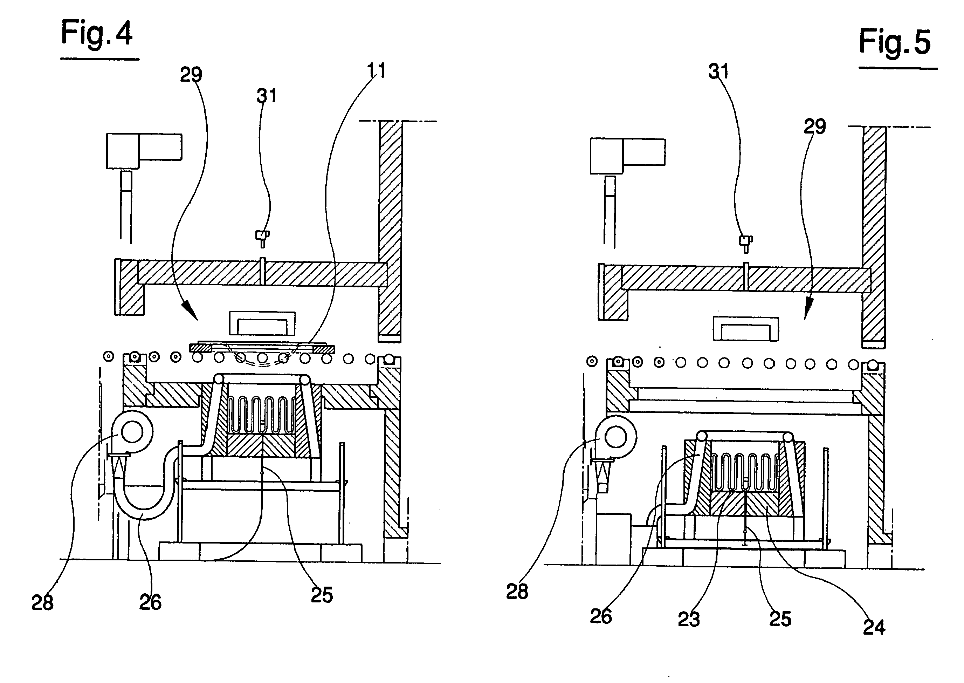

The die 24 is positioned at the lower wall of the forming chamber 29. The die 24 is vertically translatable from the rest position of figure 4 to the working position of figure 1, in which working position it contacts the support plate 12, raising it from the rows of rollers 19, 20 and keeping it raised for the time required for the forming. It is also translatable into the position of figure 5 for maintenance and, if necessary, replacement.

The forming section 21 is also provided with a laser sensor 31, positioned above the chamber 29 and destined to detect the depth of the concavity 30 in order to regulate and define the forming modalities.

The pieces exiting from the forming section 21 enter an insulated chamber 32, where the detensioning operation is performed, by means of a gradual and controlled cooling from about 500°C down to ambient temperature, over a sufficiently long period; the capacity of this chamber can be optimized by means of arranging contiguously and vertically the formed pieces 40, in a special forked rack 33, intermittently activated according to the frequency of the forming process.

The transfer of the pieces 40 from the roller plane 13 to the rack 33 is done using a special apparatus 35, located at the inlet of the insulated chamber 32. The special apparatus 35 comprises a raising piston 36, which brings each single piece 40 from the contact position with the roller plane 13 into the raised position illustrated in a broken line, and by a pair of lateral forks 37, illustrated clearly in figure 6, and activated horizontally by actuators 38 arranged externally of the insulated chamber 32.

The controlled cooling of the pieces 40 in the detensioning section 22 is done using groups of destratifier ventilators 39, acting internally of the chamber 32 and using further groups 41 acting externally of the chamber 32.

The hardening section 17 is located adjacent to the forming section 21, on the opposite side thereof from the detensioning chamber 22, and comprises batteries of nozzles 42, 43, arranged above and below the sliding plane of the work-pieces. The batteries of nozzles are connected to forced-air conduits 44.

With reference to figure 3, the hardening section 17 is used for hardening the formed workpieces 40, which are first subjected to heating in the forming section 21 and are then transported through the hardening section 17 in order to be rapidly cooled and therefore hardened.

The forming process realized with the above-described machine is carried out using the following modalities.

When the glass sheets 11, supported on the support plates 12 and located on the roller plane 13, reach the right position internally of the forming section 21, the heating process begins, after the forming die 24 has been raised and the localized means for cooling 26 activated and the depression 25 created. The heating and consequent forming action are continued up until the sheet 11 reaches the desired shape, which is controlled by the laser sensor 31. The temperature which can be reached during this stage is differentiated between above and below the sheet 11, i.e. 600°C and 800°C, which is however variable according to the material the sheet 11 is made of.

At the end of the forming stage, the support plate 12 is brought back into the inlet 15 location and the formed piece 40 is transferred into the insulated chamber 32, at the position of the special apparatus 35 where the piece is raised from the roller plane 13 and moved onto the forked rack 33. The detensioning stage, i.e. the stabilisation stage, is then carried out, with a controlled cooling operation inside the insulated chamber 32, with the use of the ventilation group 39, and at the exit further ventilation groups 41. Considering the special configuration of the conveyors 33 used in this section of the machine 10, the speed of activation of the conveyors 33 and the dimensions of the insulated chamber 32, the duration of this stage of the process is such as to ensure detensioning of the pieces formed during the forming stage, thus removing the risk of causing breakage of the workpieces during further mechanical operations performed thereon.

The hardening stage is performed by positioning the pieces 40 in an upturned position, as shown in figure 3, on the roller plane 13 and transporting them inside the forming section 21, to the position of the heating elements 23. After heating to the desired temperature, the pieces 40 are brought back towards the hardening section 17 where the rapid cooling stage takes place, with forced air supply through the conduits 44 to the nozzles 42, 43.

The support plate 12, thanks to the shape and dimensions thereof, is the same for the whole plant and is recuperated each time the formed glass sheet enters the chamber 32, using the same means roller conveyor 13 which bring the plate 12 back into the initial position at the inlet 15. This means that the whole plant uses only one support plate 12 for each type of form.

The structural advantages and characteristics of the forming machine of the invention, as well as the operative advantages and characteristics of the forming process associated to the machine are evident from the above description. It is also evident that those characteristics and advantages still emerge though variations and modifications may be made to some constructional details thereof.

For example, a salient characteristic which is conserved is the energy saving which derives from the fact that a single heating stage is used to form and detension the workpiece, and the heating stage is performed once only during the performance of a work cycle, which can last up to days and even weeks. A further fact is that the machine and process require reduced manpower in comparison with traditional processes, as the forming and detensioning operations are continuous and performed in a single machine.

Obviously the shape and dimensions of the die 24 can vary according to the applications, and the shape and dimensions of the detensioning chamber can vary, as can indeed the stacking capacity of the fork rack 33.

The number and dimensions of the ventilation groups 39, 41 can also vary, according to the applications, though an adequate cooling zone has to be allowed in the detensioning section.

## Claims

1. A machine for forming glass sheets, or similar materials, wherein the machine is composed of sections (17, 21, 22) dedicated to operations of forming, detensioning and hardening of the glass sheets (11), ***characterized in that the*** glass sheets (11) are translated through the sections (17, 21, 22) by conveyors (13, 33), ***and in that*** a forming section (21) of the sections *is* located in an intermediate position between the detensioning section and the hardening ; the forming section (21) being provided with means for heating for carrying out the operations of forming, detensioning and hardening of the glass sheets (11).

2. The machine (10) of claim 1, wherein the forming section (21) comprises a roller conveyor arranged on two lines (19, 20) which are parallel and which advance the glass sheets (11), and wherein the forming section (21) also comprises a forming die (24) associated to means for creating a depression (25), means for heating (23) and means for localized cooling (26) of the glass sheets (11).

3. The machine (10) of claim 2, wherein the means for heating (23) are located in a lower part of the forming die (24).

4. The machine (10) of claim 2 or 3, wherein the means for localized cooling (26) are destined to cool a part of the glass sheet (11) which is a perimeter and which surrounds a central concavity (30) exhibited by the glass sheet (11).

5. The machine (10) of claim 4, wherein the forming section (21) comprises sensors (31) for detecting a depth of the concavity (30), which sensors (31) are laser sensors.

6. The machine of any one of claims from 2 to 5, wherein the forming die (24) is translatable vertically from an upper position in which the forming die (24) supports the glass sheet (11) during a forming process, and a lower position which is a rest position and in which maintenance or replacement operations can take place.

7. The machine (10) of any one of the preceding claims, wherein the conveyors (13, 33) are powered by actuators, which actuators are discrete and independent for each of the sections (17, 21, 22) making up the machine.

8. The machine (10) of any one of the preceding claims, wherein the detensioning section (22) comprises, in an insulated chamber (32), an apparatus (35) for removal of the glass sheet (11) from the roller conveyor (13) when the glass sheet (11) exits from the forming section (21), and a fork rack (33) operating in a step sequence which receives the glass sheets (11) in contiguous vertical planes during a controlled cooling stage, the cooling stage being performed using ventilator groups (39, 41) acting respectively inside and outside the insulated chamber (32).

9. The machine (10) of any one of the preceding claims, wherein the hardening section (17) uses the means for heating (23) comprised in the forming section (21) and comprises means for cooling by forced air (42, 43) which are arranged above and below an advancement plane of formed glass sheets which have undergone a hardening process.

## Patentansprüche

1. Vorrichtung zum Formen von Glasscheiben, bei welcher die Vorrichtung aus Abschnitten (17, 21, 22) besteht, bestimmt für die Vorgänge des Formens, des Entspannens und des Härtens der Glasscheiben (11), **dadurch gekennzeichnet, dass** die Glasscheiben (11) von Förderern (13, 33) durch die Abschnitte (17, 21, 22) geleitet werden, und **dadurch,** dass ein Formabschnitt (21) der Abschnitte in einer zwischenliegenden Position zwischen dem Entspannungsabschnitt und dem Härteabschnitt angeordnet ist; wobei der Formabschnitt (21) mit Mitteln zum Erhitzen versehen ist, um die Vorgänge des Formens, des Entspannens und des Härtens der Glasscheiben (11) durchzuführen.

2. Vorrichtung (10) nach Patentanspruch 1, bei welcher der Formabschnitt (21) einen Rollenförderer enthält, angeordnet an zwei Linien (19, 20), welche parallel zueinander verlaufen und die Glasscheiben (11) zum Vorlaufen bringen, und bei welcher der Formabschnitt (21) ebenfalls eine Formmatrize (24) enthält, die Mitteln zum Erzeugen eines Unterdruckes (25), Mitteln zum Erhitzen (23) und Mitteln zum örtlichen Kühlen (26) der Glasscheiben (11) zugeordnet ist.

3. Vorrichtung (10) nach Patentanspruch 2, bei welcher die Mittel zum Erhitzen (23) in einem unteren Teil der Formmatrize (24) angeordnet sind.

4. Vorrichtung (10) nach Patentanspruch 2 oder 3, bei welcher die Mittel zum örtlichen Kühlen (26) dazu bestimmt sind, einen Teil der Glasscheibe (11) zu kühlen, welcher umlaufend ist und eine mittlere Vertiefung (30) umgibt, aufgewiesen von der Glasscheibe (11).

5. Vorrichtung (10) nach Patentanspruch 4, bei welcher der Formabschnitt (21) Fühler (31) enthält, um die Tiefe der Vertiefung (30) zu erfassen, welche Fühler (31) Laserfühler sind.

6. Vorrichtung nach einem beliebigen der Patentansprüche von 2 bis 5, bei welcher die Formmatrize (24) vertikal verschiebbar ist aus einer oberen Position, in welcher die Formmatrize (24) die Glasscheibe (11) trägt, in eine untere Position, welche eine Ruheposition ist, und in welcher Wartungs- oder Austauscharbeiten vorgenommen werden können.

7. Vorrichtung (10) nach einem beliebigen der vorstehenden Patentansprüche, bei welcher die Förderer (13, 33) durch Antriebe betätigt werden, welche Antriebe für jeden der die Vorrichtung bildenden Abschnitte (17, 21, 22) getrennt und unabhängig sind.

8. Vorrichtung (10) nach einem beliebigen der vorstehenden Patentansprüche, bei welcher der Abschnitt zum Entspannen (22) in einer isolierten Kammer (32) eine Einrichtung (35) zur Entnahme der Glasscheibe (11) von dem Rollenförderer (13) enthält, wenn die Glasscheibe (11) aus dem Formabschnitt (21) austritt, sowie ein schrittweise arbeitendes Gabelgestell (33), welches die Glasscheiben (11) in aneinandergrenzenden vertikalen Ebenen aufnimmt, und zwar während einer gesteuerten Kühlphase, die unter Verwendung von Ventilatorgruppen (39, 41) durchgeführt wird, die jeweils innerhalb und ausserhalb der isolierten Kammer (32) wirken.

9. Vorrichtung (10) nach einem beliebigen der vorstehenden Patentansprüche, bei welcher der Abschnitt zum Härten (17) die Mittel zum Erhitzen (23) nutzt, enthalten in dem Formabschnitt (21), und Mittel zum Kühlen durch Luftgebläse (42, 43) enthält, welche oberhalb und unterhalb einer Vorlauffläche der geformten Glasscheiben angeordnet sind, welche einem Härteverfahren unterzogen wurden.

## Revendications

1. Machine de façonnage de feuilles de verre, ou de matériaux similaires, dans laquelle la machine est composée de sections (17, 21, 22) dédiées aux opérations de façonnage, de détensionnement et de trempe des feuilles de verre (11), **caractérisée en ce que** les feuilles de verre (11) sont translatées au travers des sections (17, 21, 22) par des convoyeurs (13, 33), et **en ce qu'**une section de façonnage (21) des sections est située dans une position intermédiaire entre la section de détensionnement et la section de trempe; la section de façonnage (21) étant pourvue de moyens de chauffe pour l'exécution des opérations de façonnage, détensionnement et trempe des feuilles de verre (11).

2. Machine (10) selon la revendication 1, dans laquelle la section de façonnage (21) comprend un convoyeur à rouleaux disposé sur deux lignes (19, 20) parallèles et faisant avancer les feuilles de verre (11), et dans laquelle la section de façonnage (21) comprend également un moule de façonnage (24) associé à des moyens de création d'une dépression (25), des moyens de chauffage (23) et des moyens de refroidissement localisé (26) des feuilles de verre (11).

3. Machine (10) selon la revendication 2, dans laquelle les moyens de chauffage (23) sont situés dans une partie inférieure du moule de façonnage (24).

4. Machine (10) selon la revendication 2 ou 3, dans lequel les moyens de refroidissement localisé (26) sont destinés à refroidir une partie de la feuille de verre (11) constituant son périmètre et entourant une concavité centrale (30) présentée par la feuille de verre (11).

5. Machine (10) selon la revendication 4, dans laquelle la section de façonnage (21) comprend des capteurs (31) pour détecter une profondeur de la concavité (30), lesdits capteurs (31) étant de type laser.

6. Machine selon n'importe laquelle des revendications 2 à 5, dans laquelle le moule de façonnage (24) est translatable verticalement entre une position supérieure, dans laquelle le moule de façonnage (24) supporte la feuille de verre (11) pendant un processus de façonnage, et une position inférieure, qui est une position dans laquelle les opérations de maintenance ou de remplacement peuvent être effectuées.

7. Machine (10) selon n'importe laquelle des revendications précédentes, dans laquelle les convoyeurs (13, 33) sont actionnés par des actionneurs, lesquels actionneurs sont séparés et indépendants pour chacune des sections (17, 21, 22) constituant la machine.

8. Machine (10) selon n'importe laquelle des revendications précédentes, dans laquelle la section de détensionnement (22) comprend, dans une chambre isolée (32), un dispositif (35) pour le prélèvement de la feuille de verre (11) du convoyeur à rouleaux (13) lorsque la feuille de verre (11) sort de la section de façonnage (21), et un râtelier à fourches (33) fonctionnant de manière intermittente qui reçoit les feuilles de verre (11) dans des plans verticaux contigus pendant une phase de refroidissement contrôlée, la phase de refroidissement étant réalisée en utilisant des groupes ventilateurs (39, 41) agissant respectivement à l'intérieur et à l'extérieur de la chambre isolée (32).

9. Machine (10) selon n'importe laquelle des revendications précédentes, dans laquelle la section de trempe (17) utilise les moyens de chauffage (23) compris dans la section de façonnage (21) et comprend des moyens de refroidissement à air forcé (42, 43) qui sont disposés au-dessus et au-dessous d'un plan d'avancée des feuilles de verre façonnées qui ont subit un processus de trempe.
